(19) **Europäisches Patentamt**

**European Patent Office**

**Office européen des brevets**

(11) Numéro de publication : **0 558 400 A1**

(12) # DEMANDE DE BREVET EUROPEEN

(21) Numéro de dépôt : **93400461.5**

(22) Date de dépôt : **23.02.93**

(51) Int. Cl.$^5$ : **H04B 10/16**

(30) Priorité : **28.02.92 FR 9202416**

(43) Date de publication de la demande : **01.09.93 Bulletin 93/35**

(84) Etats contractants désignés : **DE ES FR GB IT**

(71) Demandeur : **ALCATEL CIT**
**12 Rue de la Baume**
**F-75008 Paris (FR)**

(72) Inventeur : **Morin, Stephane**
**13, Rue Joseph Lesbleiz**
**F-22300 Ploubzre (FR)**
Inventeur : **Ollivier, Francois Xavier**
**Chemin du Beg Hent**
**F-22300 Lannion (FR)**
Inventeur : **Pamart, Jean-Luc**
**Ker Hoadenn Quemperven**
**F-22450 La Roche Derrien (FR)**

(74) Mandataire : **Pothet, Jean Rémy Emile Ludovic et al**
**c/o SOSPI 14-16 rue de la Baume**
**F-75008 Paris (FR)**

(54) **Système de transmission d'informations numériques sur une liaison optique à répéteurs à amplificateurs optiques.**

(57)   Dans ce système de transmission d'informations numériques sur une liaison optique à répéteurs à amplificateurs optiques, l'équipement d'extrémité-émission (1) comporte des moyens de codage correcteur d'erreurs (4), et l'équipement d'extrémité-réception comporte(2) des moyens de décodage correcteur d'erreurs.

EP 0 558 400 A1

La présente invention concerne la transmission d'informations numériques, notamment à longue distance, sur une liaison optique.

Sur une liaison destinée à assurer une transmission d'informations, notamment à longue distance, il est connu de disposer, à intervalles réguliers, des équipements dits intermédiaires permettant d'amplifier les signaux porteurs de ces informations, en vue de compenser l'atténuation qu'ils subissent du fait même de leur transmission sur cette liaison.

Ainsi, dans le cas de transmission d'informations analogiques sur une liaison électrique, il est connu d'utiliser des équipements intermédiaires appelés répéteurs, à amplificateurs électroniques.

De même, dans le cas de transmission d'informations numériques sur une liaison électrique, il est connu d'utiliser des équipements intermédiaires appelés régénérateurs assurant non seulement une amplification desdits signaux mais également, compte tenu de la nature numérique de ces informations, une reconstitution aussi fidèle que possible de celles-ci.

Dans le cas de transmission d'informations numériques sur une liaison optique, il est connu d'utiliser des équipements régénérateurs pour traiter les signaux obtenus après conversion optique-électrique des signaux optiques transmis sur cette fibre.

Cependant, depuis l'apparition d'amplificateurs dits optiques, tels que par exemple les amplificateurs à fibre dopée ou les amplificateurs optiques à semi-conducteur, aptes à amplifier directement des signaux optiques, il est devenu possible d'utiliser de tels amplificateurs en tant qu'équipements intermédiaires, ou répéteurs.

Outre le fait qu'ils amplifient les signaux incidents, les amplificateurs, qu'ils soient électroniques ou optiques, constituent cependant des sources de bruit, et il est alors nécessaire de considérer le bilan énergétique de l'ensemble formé par une liaison équipée de répéteurs à amplificateurs. De ce point de vue, une liaison optique équipée de répéteurs à amplificateurs optiques se comporte comme une liaison électrique équipée d'amplificateurs électroniques.

Or, la théorie élaborée pour la transmission d'informations analogiques sur une liaison électrique munie de répéteurs à amplificateurs électroniques, montre qu'il existe, dans l'hypothèse de répéteurs identiques, équidistants, et compensant chacun exactement l'affaiblissement apporté par le tronçon de ligne qui le précède, c'est-à-dire dans l'hypothèse de pas dits à gain unitaire (un pas étant défini comme étant constitué d'un répéteur et du tronçon de ligne qui précède ce répéteur) une relation entre le rapport signal-sur-bruit à l'extrémité-réception de cette liaison et certains paramètres caractéristiques de ce système, incluant des paramètres caractéristiques de cette liaison, tels que le nombre de pas et la longueur de ces pas (un accroissement du nombre de pas, de même qu'une augmentation de la longueur des pas, intervenant, toutes choses égales par ailleurs, pour faire baisser ce rapport signal-sur-bruit).

Par ailleurs la théorie relative à la transmission d'informations numériques montre que le taux d'erreurs en réception, à savoir le rapport entre le nombre de bits faux à l'issue de l'opération de décision effectuée en réception dans un tel système, pour permettre la reconstitution desdites informations, et le nombre total de bits reçus, est, du moins dans l'hypothèse de bruit à statistique gaussienne, lié au rapport signal-sur-bruit avant ladite opération de décision.

Il en résulte qu'il existe, pour un système de transmision d'informations numériques sur une liaison optique munie de répéteurs à amplificateurs optiques, dans les hypothèses considérées, et en tenant par ailleurs compte de la contribution de bruit due aux éléments de l'équipement d'extrémité-réception situés en amont de ceux réalisant ladite opération de décision, une relation entre le taux d'erreurs en réception et certains paramètres caractéristiques de ce système, incluant des paramètres caractéristiques de cette liaison, tels que le nombre de pas et la longueur des pas (un accroissement du nombre de pas, de même qu'une augmentation de la longueur des pas, intervenant, toutes choses égales par ailleurs, pour augmenter ce taux d'erreurs).

La présente invention a pour but, dans un système de transmission d'informations numériques sur une liaison optique munie de répéteurs à amplificateurs optiques, aussi bien d'améliorer, pour un dimensionnement déterminé de ce système c'est-à-dire pour des valeurs déterminées desdits paramètres caractéristiques, le taux d'erreurs en réception par rapport à celui qui serait obtenu, pour lesdites valeurs, par la relation ainsi rappelée, que de permettre, pour un taux d'erreurs imposé en réception, un dimensionnement dit dégradé de ce système, c'est-a-dire qui conduirait, par la relation ainsi rappelée, à un taux d'erreur supérieur audit taux d'erreurs imposé.

Un tel dimensionnement dégradé consistera par exemple en une augmentation du nombre de pas, en vue de prolonger ladite liaison au delà de la longueur correspondant, par ladite relation, et pour les mêmes valeurs des autres paramètres caractéristiques intervenant dans ladite relation, audit taux d'erreurs imposé, ou en une augmentation de la longueur des pas, en vue de réduire le nombre de répéteurs, par rapport au nombre dit nominal correspondant, par ladite relation, et pour les mêmes valeurs des autres paramètres caractéristiques intervenant dans ladite relation, au taux d'erreurs imposé, ou encore en une combinaison de ces deux effets.

La présente invention a pour objet un système de transmission d'informations numériques sur une liaison optique, comportant un équipement d'extrémité-émission, un équipement d'extrémité-réception, et un ou plusieurs répéteurs à amplificateurs optiques, essentiellement caractérisé en ce que ledit équipement d'extrémité-émission comporte des moyens de codage correcteur d'erreurs et ledit équipement d'extrémité-réception des moyens de décodage correcteur d'erreurs.

D'autres objets et caractéristiques de la présente invention apparaîtront à la lecture de la description suivante d'un exemple de réalisation, faite en relation avec les dessins ci-annexés dans lesquels:

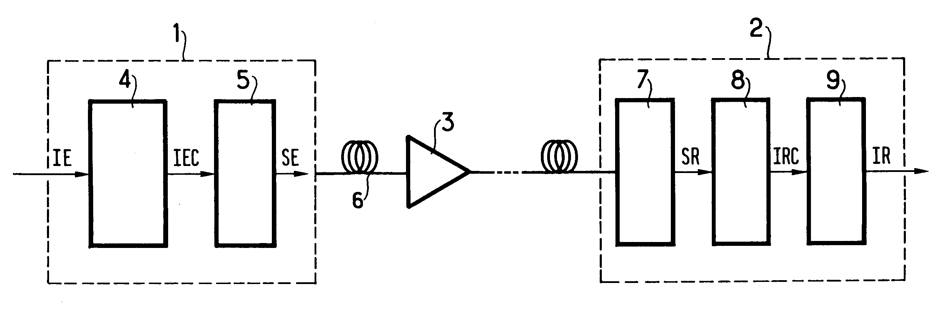

- la figure 1 représente un schéma synoptique d'un système de transmission suivant l'invention,
- la figure 2 est un diagramme illustrant à titre d'exemple d'application de la présente invention, les formes de courbe donnant le taux d'erreurs en réception en fonction du niveau de réception pour différentes longueurs de pas à gain unitaire, d'une part avant décodage correcteur d'erreurs, d'autre part après décodage connecteur d'erreurs.

Le système de transmission optique illustré sur le dessin comporte un équipement dit d'extrémité-émission, référencé 1, un équipement dit d'extrémité-réception, référencé 2, et un ou plusieurs répéteurs à amplificateurs optiques, dont un seul est illustré sur le dessin, où il est référencé 3.

L'équipement d'extrémité-émission 1 comporte des moyens de codage correcteur d'erreurs, référencés 4, qui reçoivent les informations numériques à transmettre, notées IE.

Les moyens de codage correcteur d'erreurs peuvent mettre en oeuvre un code correcteur d'erreurs tel que par exemple un code linéaire en blocs comme ceux dits B.C.H (Bose Chaudhuri-Hocquenghem) ou encore Reed-Solomon, ou bien un code convolutionnel, ou bien encore mettre en oeuvre une concaténation de plusieurs de ces codes, identiques ou différents, dont on pourra trouver des descriptions dans la littérature.

L'équipement d'extrémité-émission 1 comporte en outre un émetteur optique 5, qui reçoit les informations IEC issues des moyens de codage correcteur d'erreurs et qui fournit un signal optique SE transmis sur la liaison optique, référencée 6. L'émetteur optique 5 comporte notamment un transducteur électro-optique ainsi qu'éventuellement des moyens pour mettre les informations numériques à transmettre et issues en l'occurrence des moyens de codage correcteur d'erreurs, sous une forme adaptée à leur transmission sur une liaison optique.

Les répéteurs tels que 3 peuvent être par exemple des amplificateurs optiques à fibre dopée ou bien des amplificateurs optiques à semi-conducteur.

L'équipement d'extrémité-réception 2 comporte un filtre optique, 7, destiné à rejeter le bruit optique engendré par les amplificateurs optiques de façon à augmenter le rapport signal-sur-bruit.

Le signal optique SR issu de ce filtre optique est appliqué à un récepteur optique, 8, qui délivre des informations numériques IRC, lesquelles sont appliquées à des moyens de décodage correcteur d'erreurs 9 opérant suivant le code choisi pour les moyens de codage correcteur d'erreurs 4. Le récepteur optique 8 comporte notamment un transducteur optoélectronique, des moyens de décision, ainsi qu'éventuellement des moyens permettant de repasser de la forme des informations numériques adaptée à leur transmission sur la liaison optique à la forme initiale.

Comme rappelé plus haut, il résulte de la théorie élaborée pour les systèmes de transmission d'informations analogiques sur une liaison équipée de répéteurs à amplificateurs électroniques, que le rapport signal-sur-bruit à l'extrémité-réception de cette liaison, s'exprime, dans les hypothèses rappelées plus haut, sous forme logarithmique, en retranchant successivement au niveau d'émission du système plusieurs termes:
- un terme représentant l'affaiblissement par tronçon de ligne,
- un terme représentant le niveau de bruit introduit, par répéteur,
- un terme fonction du nombre de répéteurs, plus précisément par l'intermédiaire de la fonction logarithme,
(voir par exemple "Systèmes de Télécommunications - Bases de transmission" - P.G. FONTOLLIET - Collection Technique et Scientifique des Télécommunications - DUNOD),
ainsi que, les effets non linéaires engendrés dans le support de transmission constitué ici de fibres optiques étant non négligeables,
- un terme fonction de ces effets non linéaires, par tronçon de ligne.

Il résulte en outre de la théorie relative aux systèmes de transmission d'informations numériques que le taux d'erreurs en réception, $\varepsilon$, est, dans l'hypothèse rappelée plus haut, lié au rapport signal-sur-bruit avant décision, par l'intermédiaire de la fonction dite de Gauss intégrale complémentaire (voir par exemple l'ouvrage cité ci-dessus).

Dans le cas considéré ici, le rapport signal-sur-bruit avant décision diffère du rapport signal-sur-bruit à l'extrémité-réception de la liaison, par le fait que le rapport signal-sur-bruit avant décision inclut en outre la contribution de bruit propre au récepteur optique, pour les éléments de ce récepteur qui interviennent avant ladite opération de décision.

Le taux d'erreurs en réception, ε', pour un système tel que celui illustré sur le dessin, est en outre lié au taux d'erreurs ε mentionné ci-dessus, par une relation du type:

$$\varepsilon' = \frac{1}{n} \sum_{i=t+1}^{n} (i+t) \, C_n^i \, \varepsilon^i \, (1-\varepsilon)^{n-i}$$

où "n" et "t" sont des paramètres définissant le code correcteur d'erreurs utilisé, "n" désignant la longueur du mode de code, et "t" désignant le nombre d'erreurs corrigibles par mot de code (voir par exemple "Code correcteurs Théorie et Applications" A. Poli, L. Huguet, MASSSON - Logique mathématiques informatique.

Comme indiqué plus haut, la présente invention permet ainsi, pour un taux d'erreurs ε' imposé, un dimensionnement dit dégradé de ce système, c'est-à-dire conduisant à un taux d'erreurs ε supérieur à ε'.

A titre d'exemple de dimensionnement dégradé, on citera:
- un accroissement du nombre de pas,
- un accroissement de la longueur des pas,
- un accroissement du niveau de bruit introduit, par répéteur,
- un accroissement de l'affaiblissement linéique caractérisant le support de transmission,
- une dégradation des performances de l'émetteur optique, entraînant une réduction du niveau de signal à l'extrémité-émission (ou réception) de la liaison,
- une dégradation des performances du récepteur optique, par exemple une réduction de sensibilité du transducteur optoélectronique, entraînant une dégradation du rapport signal-sur-bruit avant décision,
- un accroissement des effets non linéaires dans le support de transmission,
- plusieurs de ces effets simultanément.

La présente invention permet aussi, pour un dimensionnement déterminé de ce système, d'obtenir une amélioration de la marge de fonctionnement par rapport à des performances minimales auxquelles le système doit satisfaire, cette marge permettant d'absorber des fluctuations ou des dégradations du point de fonctionnement optimal du système causées par exemple par un vieillissement des composants ou une modification des conditions d'environnement (température, électromagnétisme,...)

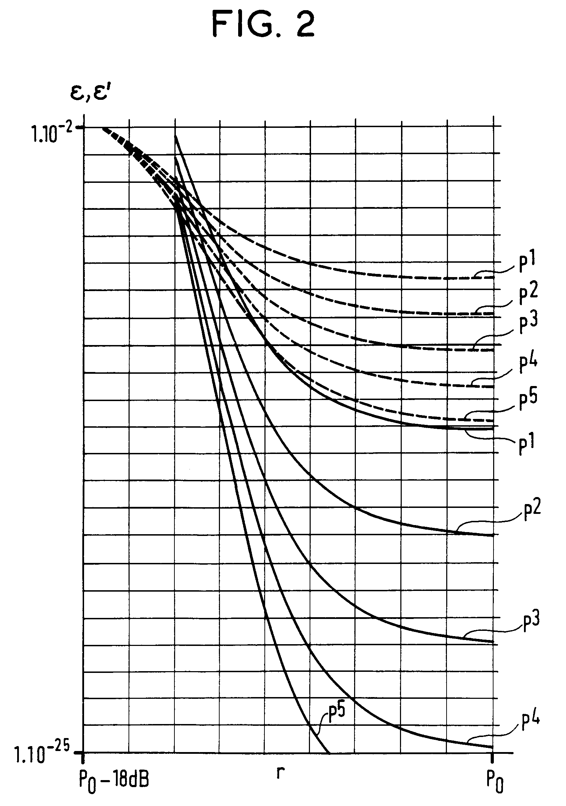

Le diagramme de la figure 2 illustre les formes de courbe donnant le taux d'erreur en réception d'une part avant décodage correcteur d'erreurs (ε), d'autre part après décodage correcteur d'erreurs (ε') en fonction du niveau de réception noté "r", et exprimé en dBm, pour différentes longueurs de pas à gain unitaire (en l'occurrence cinq longueurs notées p1, p2, p3, p4, p5 par ordre de longueurs décroissantes) sur une liaison de longueur donnée.

Les courbes correspondant au taux d'erreur avant décodage correcteur d'erreurs sont représentées en pointillés et celles correspondant au taux d'erreur après décodage correcteur d'erreurs sont représentées en traits pleins. On observe dans chacun des cas que pour un pas de longueur donnée, le taux d'erreur diminue quand le niveau de réception augmente, et que pour un niveau de réception donné, le taux d'erreur diminue quand la longueur du pas diminue.

On observe en outre que pour un niveau de réception et une longueur de pas donnée, le taux d'erreurs ε après décodage correcteur d'erreurs est inférieur au taux d'erreurs ε' avant décodage correcteur d'erreurs dans les limites des capacités de correction du code correcteur d'erreurs utilisé.

**Revendications**

**1/** Système de transmission d'informations numériques sur une liaison optique, comportant un équipement d'extrémité-émission (1), un équipement d'extrémité-réception (2), et un ou plusieurs répéteurs (3) à amplificateurs optiques, caractérisé en ce que ledit équipement d'extrémité-émission comporte des moyens de codage correcteur d'erreurs (4) et ledit équipement d'extrémité-réception des moyens de décodage correcteur d'erreurs (9).

**2/** Système selon la revendication 1, caractérisé en ce que lesdits moyens de codage et lesdits moyens de décodage correcteur d'erreurs sont utilisés pour permettre, pour un taux d'erreurs en réception imposé en sortie desdits moyens de décodage correcteur d'erreurs, un dimensionnement dit dégradé de ce système, c'est-à-dire conduisant, par la relation liant le taux d'erreurs en entrée desdits moyens de décodage à des paramètres caractéristiques de ce système, à un taux d'erreurs supérieur audit taux d'erreurs imposé.

**3/** Système selon la revendication 2, caractérisé en ce que ledit dimensionnement dégradé consiste en une augmentation du nombre de pas à gain unitaire de ladite liaison.

**4/** Système selon la revendication 2, caractérisé en ce que ledit dimensionnement dégradé consiste en une augmentation de la longueur des pas à gain unitaire de ladite liaison.

**5/** Système selon la revendication 1, caractérisé en ce que lesdits moyens de codage correcteur d'erreurs et lesdits moyens de décodage correcteur d'erreurs sont utilisés pour permettre d'obtenir, pour un dimensionnement donné de ce système, une amélioration de la marge de fonctionnement par rapport à des performances minimales auxquelles le système doit satisfaire.

IE

IEC

SE

1

4

5

3

6

SR

IRC

IR

2

7

8

9

EP 0 558 400 A1

# FIG. 2

Office européen
des brevets

**RAPPORT DE RECHERCHE EUROPEENNE**

Numero de la demande

EP    93 40 0461

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | IEEE INTERNATIONAL CONFERENCE ON COMMUNICATIONS ICC 90 vol. 1, no. 219, 15 Avril 1990, ATLANTA, GA,USA pages 172 - 176 , XP000147398 K.NAKAGAWA 'Advanced very high-speed Optical Fiber Transmission Systems' | 1 | H04B10/16 |
| A | * page 174, colonne de droite, alinéa 1 * * page 174, colonne de droite, dernier alinéa  - page 175, colonne de gauche, alinéa 3 * | 2 | |
| Y | WO-A-9 104 530 (TANDEM COMPUTERS) * page 2, ligne 3 - ligne 19; figure 2 * | 1 | |
| A | GB-A-2 217 944 (KOKUSAI DENSHIN DENWA) * page 6, alinéa 1 -alinéa 2; figure 1 * | 2,5 | |
| A | PATENT ABSTRACTS OF JAPAN vol. 14, no. 411 (E-973)5 Septembre 1990 & JP-A-21 55 323 ( NEC ) 14 Juin 1990 * abrégé * | 1,2,5 | DOMAINES TECHNIQUES RECHERCHES (Int. Cl.5 ) |
| A | PATENT ABSTRACTS OF JAPAN vol. 13, no. 126 (E-734)28 Mars 1989 & JP-A-63 294 139 ( MITSUBISHI ELECTRIC ) 30 Novembre 1988 * abrégé * | 1,2 | H04B H04L |

Le présent rapport a été établi pour toutes les revendications

| Lieu de la recherche | Date d'achèvement de la recherche | Examinateur |
|---|---|---|
| LA HAYE | 11 MAI 1993 | GOUDELIS M. |

EPO FORM 1503 03.82 (P0402)